# EUROPÄISCHE PATENTSCHRIFT

(11) **EP 2 522 572 B1**
(45) Veröffentlichungstag und Bekanntmachung des Hinweises auf die Patenterteilung: **31.12.2014**
(21) Anmeldenummer: 12003468.1
(22) Anmeldetag: 07.05.2012
(51) Int. Cl.: B64C 1/12

(54) **Schlagschutzplatte für Fahrzeuge, insbesondere Luftfahrzeuge**
Impact protection board for vehicles, in particular aircraft
Pare-chocs pour véhicules, en particulier pour aéronefs

(30) Priorität: 12.05.2011 DE 102011101303
(43) Veröffentlichungstag der Anmeldung: 14.11.2012
(73) Patentinhaber: Airbus Defence and Space GmbH, 85521 Ottobrunn (DE)
(72) Erfinder: Starke, Peter, 85521 Ottobrunn (DE); Fischer, Michael, 86643 Stepperg (DE); Wachinger, Martha, 85445 Oberding (DE)

(56) Entgegenhaltungen:
- EP-A2- 0 351 565
- DE-B3-102007 038 634
- FR-A1- 2 537 502
- US-A1- 2005 281 987
- US-B2- 7 063 763

## Beschreibung

Die Erfindung betrifft eine Schlagschutzplatte, vorgesehen zur Anordnung an der Struktur eines Fahrzeugs, insbesondere eines Luftfahrzeugs.

Militärische Transportflugzeuge, z.B. die C160 TRANSALL, werden immer häufiger für humanitäre Hilfs- und Katastropheneinsätze in Krisenregionen verwendet. Bei der Durchführung dieser Einsätze sind Landungen auf unbefestigten Pisten keine Seltenheit, da die Infrastruktur, insbesondere im Bereich der Start- und Landebahnen, in den betroffenen Ländern oft nicht ausreichend ausgebaut ist. Diese Außenlandungen führen zu vermehrten Steinschlagschäden an der Rumpfunterseite sowie den sich dort befindenden Antennen und Ventilen. Steinschläge an den Antennen haben oft negative Auswirkungen auf die Flugsicherheit, da Schäden dazu führen können, dass eine einwandfreie Funktionsfähigkeit von Navigations- und Funkgeräten nicht mehr gewährleistet werden kann. Des Weiteren haben diese Steinschläge oft hohe Reparaturkosten zur Folge. Bei Flügen unter Vereisungsbedingungen sind Propellerflugzeuge darüber hinaus durch den Einschlag von Eisstücken gefährdet, die sich vom Propeller ablösen.

In der DE 10 2007 038 634 B3 ist ein impuls-absorbierendes Bauteil als Teil der Struktur eines Luftfahrzeugs beschrieben, das eine erste wellenförmige und impuls-absorbierende Schicht und darauf angeordnet eine glatte Deckschicht umfasst. Dabei ist das Material der wellenförmigen Schicht derart gewählt ist, dass diese eine höhere Bruchdehnung aufweist als die Deckschicht. Wenn beim Auftreffen eines Masseteils die äußere Deckschicht durchschlagen wird, bildet sich aus der wellenförmigen Schicht ein Fangsack, mit dem die kinetische Energie des Masseteils abgebaut wird.

Der Erfindung liegt die Aufgabe zugrunde, einen Schlagschutz für ein Fahrzeug, insbesondere ein Luftfahrzeug zu schaffen, mit der Schäden durch Steinschlag, Propeller-Eisschlag, etc. sicher vermieden werden können, so dass insbesondere die Betriebssicherheit nicht beeinträchtigt wird und der Wartungs- und Reparaturaufwand der von Steinschlagschäden betroffenen Fahrzeuge gesenkt werden kann.

Diese Aufgabe wird mit der Schlagschutzplatte nach Anspruch 1 gelöst. Vorteilhafte Ausführungen der Erfindung sind Gegenstand von Unteransprüchen.

Mit der erfindungsgemäßen Schlagschutzplatte können die bei Steinschlag (im Falle eines Luftfahrzeugs insbesondere während Start und Landung) oder Propeller-Eisschlag auftretenden Kräfte und Energien gut aufgenommen und elastisch abgefedert werden. Die federnde Wirkung wird dabei insbesondere von der wellenförmigen, fahrzeugnahen Schicht erzielt, die darüber hinaus eine gute Steifigkeit aufweist. Die erfindungsgemäße Schlagschutzplatte stellt somit eine Art von "Knautschzone" für aufschlagende Masseteile dar.

Da der steinschlagkritische Bereich bei einem Flugzeug sich insbesondere an der Rumpfunterseite befindet, werden eine oder mehrere Schlagschutzplatten bevorzugt in diesem Bereich des Flugzeugrumpfs angeordnet. Zum Schutz vor Propeller-Eisschlag wird die Schlagschutzplatte insbesondere im Bereich der Propellerebene am Flugzeugrumpf angebracht.

Bei einem Flugzeug kann es sich dabei neben Transport- oder Passagierflugzeugen auch um sogenannte UAVs handeln (Unmanned Aerial Vehicles). Neben dem Einsatz an Flugzeugen kann die erfindungsgemäße Schlagschutzplatte auch zum Schutz sonstiger, mit Einschlägen von Masseteilen belasteter Fahrzeuge wie Geländewagen, LKW und Eisenbahnzüge verwendet werden.

Mit der erfindungsgemäßen Schlagschutzplatte wird eine Verringerung der Reparaturkosten am Fahrzeug erreicht und die Ausfallzeiten des Fahrzeugs können vermindert werden. Sie weist bei sehr guten stoßabsorbierenden Eigenschaften ein sehr geringes Gewicht auf.

Die erfindungsgemäßen Schlagschutzplatten können an existierende Fahrzeuge ohne größere Umbauten angeordnet werden.

Die erfindungsgemäße Schlagschutzplatte weist im Einzelnen die folgende Schichtstruktur auf:
Erste Schicht (im Folgenden auch "Wellenprofil" genannt): Diese besteht aus einem faserverstärkten Kunststoff, und ist im Querschnitt wellenförmig ausgebildet mit einem regelmäßigen Muster von alternierenden Erhebungen und Vertiefungen. Die Querzugfestigkeit des faserverstärkten Kunststoffs ist größer als 50 MPa ist. Bei der Querzugfestigkeit handelt es sich um die Zugfestigkeit des Materials in Richtung quer zur Verstärkungsfaser. Diese Querzugfestigkeit ist ein gutes Maß für die Qualität der Faser/Matrix-Anbindung innerhalb des faserverstärkten Kunststoffmaterials. Aufgrund des gewählten Parameterbereichs ist sichergestellt, dass die Integrität der Schicht und damit der angestrebte Federeffekt dieser Schicht auch bei hoher Belastung durch Einschläge erhalten bleibt. Die einzelnen Erhebungen und Vertiefungen können insbesondere eine trapezartige Form aufweisen, wobei jedoch auch andere Formen möglich sind. Die Wellenstruktur dieser Schicht hat den zusätzlichen Vorteil, dass eine gute Belüftung des Zwischenraums zwischen Schlagschutzplatte und Außenhaut des Fahrzeugs gewährleistet ist, so dass dort Korrosionsvorgänge vermieden oder zumindest erschwert werden.
Zweite Schicht (im Folgenden auch "Deckschicht" genannt): Diese ist als Deckschicht auf der ersten Schicht angeordnet. Hierbei handelt es sich um eine glatte Schicht, die in ihrer Krümmung bevorzugt an die Krümmung der Flugzeugstruktur angepasst ist. Sie besteht ebenfalls aus einem faserverstärkten Kunststoff, wobei die Bruchdehnung der Verstärkungsfaser größer als 3% beträgt. Mit der hohen Bruchdehnung wird erreicht, dass ein Versagen dieser Deckschicht bei den zu erwartenden Lasten durch Einschläge mit hoher Sicherheit vermieden werden kann.

In einer bevorzugten Ausführung ist die Bruchdehnung der Verstärkungsfaser der zweiten Schicht höher als die Bruchdehnung der Verstärkungsfasern der ersten Schicht.

Die Wahl der Schichtdicken wird abhängig vom Anwendungsfall gewählt. In den meisten Fällen wird die Dicke des Wellenprofils geringer ausfallen als die Dicke der Deckschicht. Bevorzugte Dickenbereiche sind:
Wellenprofil: zwischen 0,4 und 0,8 mm.
Deckschicht: zwischen 0,9 mm und 2,0 mm.

Für das Wellenprofil können besonders vorteilhafte die folgenden Kombinationen aus Faser und Matrix eingesetzt werden:
E-Glas/PEEK
E-Glas/PPS
E-Glas/Epoxyd
S2-Glas/PEEK
S2-Glas/PPS
S2-Glas/Epoxyd
Quarzglas/PEEK
Quarzglas/PPS
Quarzglas/Epoxyd.

Für die Deckschicht eignen sich besonders die folgenden Kombinationen aus Faser und Matrix:
S2-Glas/PEEK
S2-Glas/PPS
S2-Glas/Epoxyd
Quarzglas/PEEK
Quarzglas/PPS
Quarzglas/Epoxyd
Aramid/PEEK
Aramid/PPS
Aramid/PE
Aramid/PP

Eine besonders vorteilhafte Ausführung der erfindungsgemäßen Schlagschutzplatte weist als Material S2-Glas/Epoxyd für beide Schichten auf.

Insbesondere für die Varianten mit Epoxydharzmatrix eignet sich als Herstellungsverfahren das sogenannte VAP-Harzinjektionsverfahren, wie es z.B. in der EP 1 181 149 B1 beschrieben ist. Bei diesem Verfahren wird der durch die äußere Vakuumfolie definierte Bauteilraum durch eine luftdurchlässige aber harzundurchlässige Membran in zwei Teilräume aufgeteilt.

Die Erfindung wir im Folgenden anhand konkreter Ausführungsbeispiele unter Bezugnahme auf Figuren näher erläutert. Es zeigen:
- Fig. 1: einen Querschnitt durch eine erfindungsgemäße Schlagschutzplatte,
- Fig. 2: eine erfindungsgemäße Schlagschutzplatte am Rumpf eines Flugzeugs,
- Fig. 3: eine Kombination mehrerer erfindungsgemäßer Schlagschutzplatten,
- Fig. 4: eine Darstellung zu den Details der Befestigung einer zusätzlichen Schutzhaube an einer Aussparung der erfindungsgemäßen Schlagschutzplatte,
- Fig. 5: eine erfindungsgemäße Schlagschutzplatten mit mehreren Schutzhauben,
- Fig. 6: eine Darstellung zu den Details der Befestigung einer erfindungsgemäßen Schlagschutzplatte am Rumpf eines zu schützenden Flugzeugs.

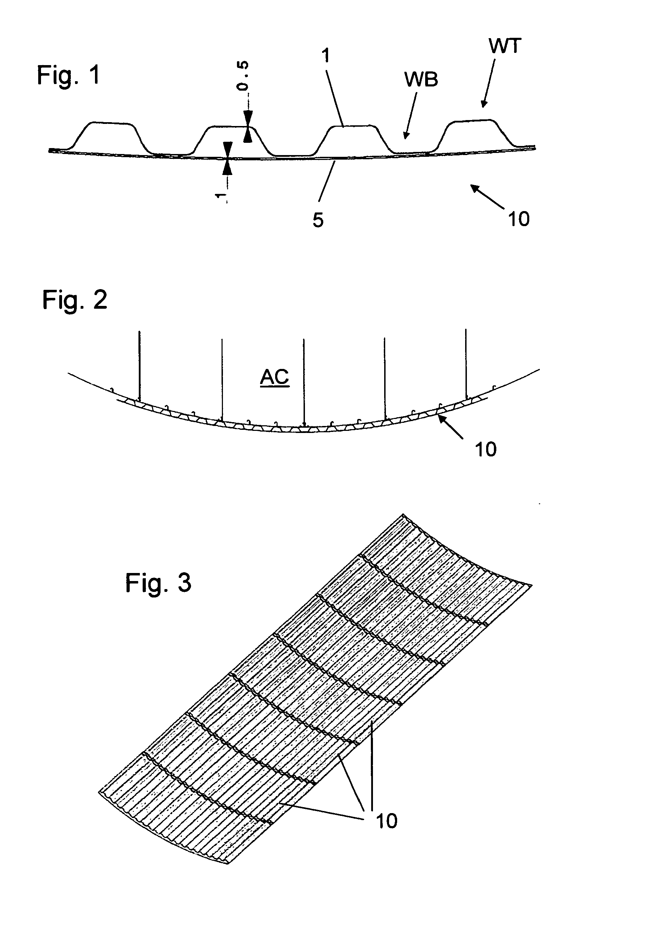

Die Fig. 1 zeigt den Querschnitt durch eine erfindungsgemäße, stoßabsorbierende Schlagschutzplatte 10, vorgesehen für den Anbau an die Rumpfunterseite eines Flugzeugs. Man erkennt die flugzeugnahe erste Schicht 1, ausgebildet als Wellenprofil mit regelmäßigen trapezförmigen Wellentälern WT und Wellenbergen WB (die Benennung als Wellental bzw. Wellenberg erfolgt aus der Sicht eines flugzeugseitigen Beobachters) in einer Richtung. Auf das Wellenprofil 1 ist die äußere (d.h. in Richtung auf den zu erwartenden Steinschlag gewandt) Deckschicht 5 angeordnet. In dem gezeigten Beispiel weist das Wellenprofil 1 eine Dicke von 0,5 mm auf, während die Deckschicht 5 eine Dicke von 1,0 mm aufweist. Die dargestellte Schlagschutzplatte ist entsprechend der Anpassung an die Kontur der Rumpfunterseite des zu schützenden Flugzeugs gekrümmt. Fig. 2 zeigt die entsprechende Schlagschutzplatte 10 am Rumpf des Flugzeugs AC.

Eine dreidimensionale Darstellung mehrerer, zu einer Gesamtplatte kombinierter Schlagschutzplatten 10 zeigt Fig. 3. Die dargestellte Gesamtplatte bildet den Steinschlagschutz des Flugzeugs. Die Unterteilung in mehrere Teilplatten ist insbesondere herstellungstechnisch bedingt und kann prinzipiell beliebig gewählt werden. Auch das Kriterium der besseren Handhabbarkeit kleinerer Platten bei der Montage ist hier von Bedeutung. Zur aerodynamischen Optimierung können sich die Deckschichten an den Anschlussbereichen überlappen.

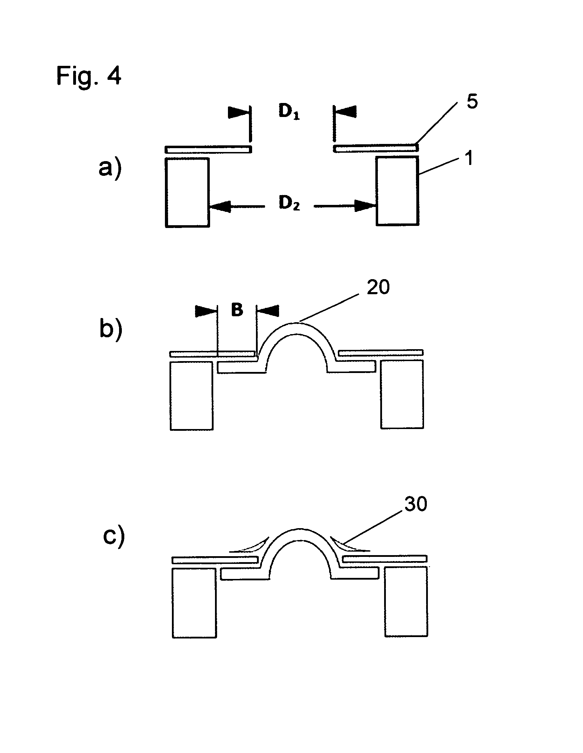

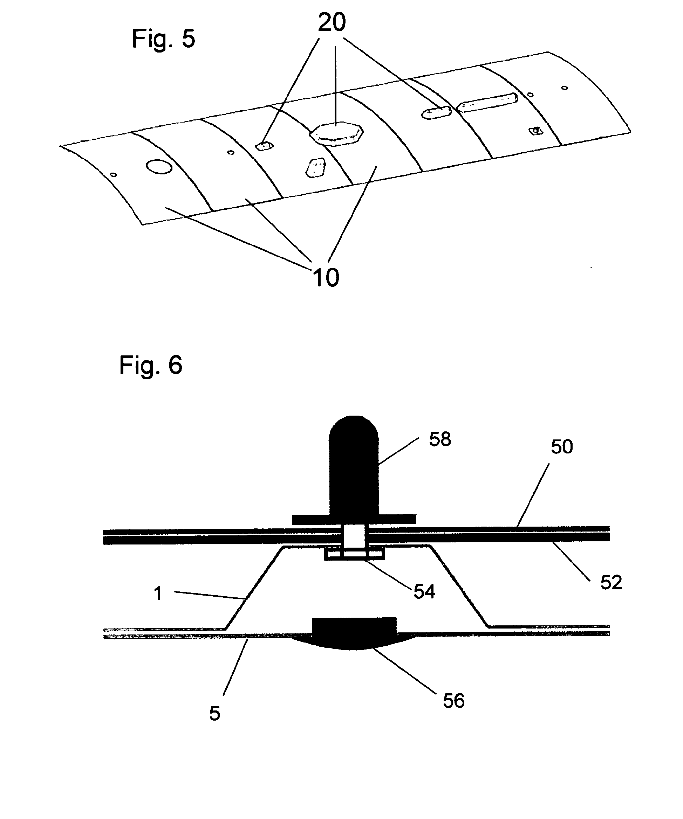

Die an der Rumpfunterseite liegenden Anbauten (insbesondere Antennen und Ventile) stellen Hindernisse für die erfindungsgemäße Schlagschutzplatte dar. Die Platte wird deshalb mit Aussparungen versehen, die mit Schutzhauben 20 (Fig. 4,5) versehen werden, um die in den Aussparungen befindlichen Anbauten abdecken und zu schützen. Als Materialien für die Schutzhaube sind die gleichen Materialien geeignet, die für die beiden Schichten 1 und 5 verwendet werden können, also z.B. thermoplastische Materialien mit Glasfasern als Verstärkung. Da es sich um nichtleitende Materialien handelt, sind Probleme mit der elektromagnetischen Abstrahlung der Antennen ausgeschlossen. Details zur Anordnung und Befestigung der Schutzhauben zeigt Fig. 4. Aufgrund seiner besonders guten elektromagnetischen Eigenschaften eignet sich als Material für die Schutzhauben insbesondere Quarzglas. In weiteren vorteilhaften Ausführungen können speziell die in der Umgebung von Antennen angeordneten Schlagschutzplatten aus Quarzglas hergestellt werden, während die weiter weg angeordneten Platten aus den genannten sonstigen (meist billigeren) Matrixmaterialien aufgebaut sind.

Um eine Schutzhaube 20 an der Deckschicht 5 befestigen zu können, wird die Aussparung an der Deckschicht 5 kleiner gewählt als am Wellenprofil 1(D₁ < D₂ in Fig. 4a)). Die Schutzhaube 20 wird von innen (flugzeugseitig) durch die Deckschicht gesteckt und an der Unterseite (flugzeug-zugewandte Seite) der Deckschicht 5 verklebt, und zwar im über den gesamten oder einen Teilbereich des Überlappungsbereichs B (Fig. 4b). Aufgrund der unterschiedlichen Durchmesser D1, D2 wird verhindert, dass die Schutzhaube vom Flugzeug abfallen kann, falls die Klebeverbindung versagt.

Als zusätzliche Sicherung der Schutzhaube 20 kann, wie in Fig. 4c) dargestellt, auf der Außenseite (flugzeug-abgewandte Seite) der Deckschicht 5 entlang der Fuge zwischen Schutzhaube 20 und Deckschicht 5 eine umlaufende Thermoplast-Schweißverbindung (30) vorhanden sein. Sie sorgt nicht nur für ein besseres Tragverhalten der Verbindung Deckschicht 5 / Schutzhaube 20 sondern gleichzeitig auch für eine Abdichtung der Fuge.

Zusätzlich können für die Befestigung der Schutzhauben auch Schraub- oder Nietverbindungen verwendet werde, insbesondere aus Thermoplast.

Fig. 5 zeigt den aus erfindungsgemäßen Platten 10 gebildeten Steinschlagschutz des Flugzeugs, die mehrere (insgesamt 11) Aussparungen mit zugehörigen Schutzhauben 20 zur Abdeckung der darunter liegenden Antennen und Ventile aufweist. Man erkennt daraus auch, dass die Aussparungen sich auch über mehrere Schlagschutzplatten 10 erstrecken können.

Fig. 6 zeigt dem Aufbau der Befestigung, mit der die Schlagschutzplatte an dem Flugzeugrumpf angeordnet ist. Zur Einleitung der Kräfte in das Flugzeuggerippe aus Spanten und Stringern (in Fig. 6 nicht eingezeichnet) werden auf der Flugzeugbeplankung 50 zusätzliche Dopplerbleche 52 aufgebracht. Dabei handelt es sich um ca. 1 mm dicke Blechstreifen, die mit Senknieten an der Außenhaut des Flugzeugs befestigt sind. Sie verlaufen zwischen entweder zwischen zwei Stringem oder zwischen zwei Spanten. Die Dopplerbleche 52 können prinzipiell sowohl an der Außen- als auch an der Innenseite der Beplankung angebracht werden. In der in Fig. 6 gezeigten Ausführung sind sie auf der Außenseite der Beplankung 50 angebracht. Auf die Dopplerbleche können zusätzlich elastische Flächenmaterialien, z.B. eine Moosgummischicht, angeordnet werden (in Fig. 6 nicht eingezeichnet), um Unebenheiten auszugleichen und erhöhte Reibung zwischen Dopplerblech 52 und Wellenprofil 1 zu vermeiden. Die Befestigung der Schlagschutzplatte erfolgt durch Schrauben 54, die im Bereich eines Wellentals angeordnet sind. Dadurch wirkt die Deckschicht 5 auch als Schutz der Schraubverbindung gegen Einwirkungen von außen. Sollte trotzdem ein Schlag von außen auf den Schraubkopf erfolgen, so sorgt diese Ausführung dafür, dass der Hebelarm für eine Krafteinleitung in die Flugzeugstruktur verhältnismäßig kurz ist und die Krafteinleitung entsprechend gering (verglichen mit der Anbringung der Schrauben an den Wellenbergen).

Um den Zugang an die Schrauben 54 von außen zu sichern, muss die Deckschicht 5 mit einer Bohrung versehen werden. Diese muss so groß ausgelegt sein, dass das notwendige Werkzeug zum Festziehen der Schraube 54 eingeführt werden kann. Nach der Montage der Schlagschutzplatte werden diese Bohrungen mit Gummideckeln 56 verschlossen. Damit der Druck im Flugzeuginneren gehalten wird, werden für die Schraubverbindung druckdichte Annietmuttem 58 verwendet. Diese sorgen dafür, dass bei montierter Schlagschutzplatte die Beplankung dicht ist. Die Annietmuttem werden im Flugzeuginneren angebracht und können mit zwei Senknieten an der Beplankung befestigt werden.

Mit dem beschriebenen Befestigungskonzept können die Steinschutzplatten schnell und flexibel an dem Flugzeug angebracht und bei Bedarf auch wieder entfernt werden.

### Verwendete Abkürzungen:

- PEEK:: Polyetheretherketon
- PPS:: Polyphenylensulfid
- PE:: Polyäthylen
- PP:: Polypropylen

## Patentansprüche

1. Schlagschutzplatte (10), vorgesehen zur Anordnung an der Struktur eines Fahrzeugs (AC), insbesondere Luftfahrzeugs, mit folgenden Merkmalen:
- sie umfasst eine erste Schicht (1) aus einem faserverstärkten Kunststoff, die ein wellenförmiges Muster von alternierenden Erhebungen (WB) und Vertiefungen (WT) aufweist, wobei die Querzugfestigkeit des faserverstärkten Kunststoffs größer als 50 MPa ist,
- sie umfasst eine auf der ersten Schicht (1) angeordnete zweite Schicht (5) aus einem faserverstärkten Kunststoff, wobei die Bruchdehnung der Verstärkungsfaser größer als 3% beträgt.

2. Schlagschutzplatte nach Anspruch 1, **dadurch gekennzeichnet, dass** die Verstärkungsfaser der zweiten Schicht (5) eine höhere Bruchdehnung aufweist als die Verstärkungsfaser der ersten Schicht (1).

3. Schlagschutzplatte nach Anspruch 1, **dadurch gekennzeichnet, dass** die Dicke der ersten Schicht (1) im Bereich zwischen 0,4 und 0,8 mm liegt und die Dicke der zweiten Schicht (5) zwischen 0,9 mm und 2,0 mm, wobei die Schlagschutzplatte dazu ausgeführt ist, im Bereich der Vertiefungen (WT) der ersten Schicht (1) an eine Fahrzeugstruktur befestigt zu werden.

4. Schlagschutzplatte nach Anspruch 3,
**dadurch gekennzeichnet, dass** fluchtend zum Ort, der zur Befestigung an die Fahrzeugstruktur vorgesehen ist, eine Durchbrechung an der zweiten Schicht (5) vorhanden ist, um die Zugänglichkeit der Befestigung von außen zu ermöglichen.

5. Schlagschutzplatte nach Anspruch 4,
**dadurch gekennzeichnet, dass** die Durchbrechung mit einem elastischen Deckel (56) verschlossen wird.

6. Schlagschutzplatte nach einem der vorangehenden Ansprüche, **dadurch gekennzeichnet, dass** sie Aussparungen für Anbauten an der Struktur des Fahrzeugs (AC) aufweist.

7. Schlagschutzplatte nach Anspruch 6,
**dadurch gekennzeichnet, dass** die Aussparungen durch Schutzhauben (20) abgedeckt sind, welche an der der ersten Schicht zugewandten Seite der zweiten Schicht (5) durch eine Klebeverbindung befestigt sind.

8. Schlagschutzplatte nach Anspruch 7,
**dadurch gekennzeichnet, dass** an der der ersten Schicht abgewandten Seite der zweiten Schicht (5) entlang der Fuge zwischen Schutzhaube (20) und zweiter Schicht (5) eine umlaufende Thermoplast-Schweißverbindung (30) vorhanden ist.

## Claims

1. Impact protection plate (10), provided so as to be arranged on the structure of a vehicle (AC), in particular an aircraft, having the following features:
- it comprises a first layer (1) made of a fibre-reinforced plastic, which has a wave-shaped pattern of alternating elevations (WB) and depressions (WT), wherein the transverse tensile strength of the fibre-reinforced plastic is greater than 50 MPa,
- it comprises, arranged on top of the first layer (1), a second layer (5) made of a fibre-reinforced plastic, wherein the elongation at failure of the reinforcing fibres is greater than 3%.

2. Impact protection plate according to Claim 1, **characterized in that** the reinforcing fibres of the second layer (5) have a higher elongation at failure than the reinforcing fibres of the first layer (1).

3. Impact protection plate according to Claim 1, **characterized in that** the thickness of the first layer (1) is in the range between 0.4 mm and 0.8 mm and the thickness of the second layer (5) is between 0.9 mm and 2.0 mm, wherein the impact protection plate is designed to be attached to a vehicle structure in the region of the depressions (WT) of the first layer (1).

4. Impact protection plate according to Claim 4, **characterized in that** an opening is present in the second layer (5), in line with the location which is provided for the attachment to the vehicle structure, in order to allow access to the attachment from outside.

5. Impact protection plate according to Claim 5, **characterized in that** the opening is closed by means of an elastic cap (56).

6. Impact protection plate according to one of the preceding claims, **characterized in that** it has cutouts for accessories on the structure of the vehicle (AC).

7. Impact protection plate according to Claim 7, **characterized in that** the cutouts are covered by protective covers (20) which are attached by means of an adhesive bond to that side of the second layer (5) which faces the first layer.

8. Impact protection plate according to Claim 8, **characterized in that**, along the join between the protective cover (20) and the second layer (5), a circumferential thermoplastic welded connection (30) is present on that side of the second layer (5) which faces away from the first layer.

## Revendications

1. Plaque (10) anti-chocs prévue pour être placée sur la structure d'un véhicule (AC) et en particulier d'un véhicule aérien, la plaque présentant les caractéristiques suivantes :
elle comprend une première couche (1) en matière synthétique renforcée de fibres qui présente un motif ondulé constitué d'une alternance de reliefs (WB) et de creux (WT), la résistance à la traction transversale de la matière synthétique renforcée de fibres étant supérieure à 50 MPa,
elle comprend une deuxième couche (5) disposée sur la première couche (1) et constituée d'une matière synthétique renforcée de fibres dont les fibres de renfort présentent un allongement à la rupture supérieur à 3 %.

2. Plaque anti-chocs selon la revendication 1, **caractérisée en ce que** les fibres de renfort de la deuxième couche (5) présentent un allongement à la rupture plus élevé que les fibres de renfort de la première couche (1).

3. Plaque anti-chocs selon la revendication 1, **caractérisée en ce que** l'épaisseur de la première couche (1) est de l'ordre de 0,4 à 0,8 mm et l'épaisseur de la deuxième couche (5) de l'ordre de 0,9 mm à 2,0 mm, la plaque anti-chocs étant conçue pour être fixée sur la structure du véhicule au niveau des creux (WT) de la première couche (1).

4. Plaque anti-chocs selon la revendication 4, **caractérisée en ce qu'**une perforation est prévue sur la deuxième couche (5) en alignement sur l'emplacement prévu pour la fixation sur la structure du véhicule, pour permettre d'accéder à la fixation depuis l'extérieur.

5. Plaque anti-chocs selon la revendication 5, **caractérisée en ce que** la perforation est fermée par un couvercle élastique (56).

6. Plaque anti-chocs selon l'une des revendications précédentes, **caractérisée en ce qu'**elle présente des découpes pour des éléments prévus sur la structure du véhicule (AC).

7. Plaque anti-chocs selon la revendication 7, **caractérisée en ce que** les découpes sont recouvertes par des capots de protection (20) qui sont fixés par une liaison collée sur le côté de la deuxième couche (5) tourné vers la première couche.

8. Plaque anti-chocs selon la revendication 8, **caractérisé en ce que** le long du joint entre le capot de protection (20) et la deuxième couche (5), une liaison thermoplastique soudée périphérique (30) est prévue sur le côté de la deuxième couche (5) non tourné vers la première couche.
